# EUROPEAN PATENT APPLICATION

(11) **EP 4 234 318 A1**
(43) Date of publication of application: **30.08.2023**
(21) Application number: 20959169.2
(22) Date of filing: 30.10.2020
(51) Int. Cl.: B60M 3/02

(54) **METHOD AND SYSTEM FOR SWITCHING POWER SUPPLY MODE OF MULTI-CURRENT TRAIN, AND RELATED COMPONENT**

(30) Priority: 28.10.2020 CN 202011173539
(71) Applicant: Zhuzhou CRRC Times Electric Co., Ltd., Zhuzhou, Hunan 412001 (CN)
(72) Inventor: XU, Shaolong, Zhuzhou, Hunan 412001 (CN); WANG, Yu, Zhuzhou, Hunan 412001 (CN); JIANG, Fengbing, Zhuzhou, Hunan 412001 (CN); XU, Jianghui, Zhuzhou, Hunan 412001 (CN); LI, Min, Zhuzhou, Hunan 412001 (CN); XIONG, Yuyu, Zhuzhou, Hunan 412001 (CN); PENG, Hui, Zhuzhou, Hunan 412001 (CN); YUAN, Jing, Zhuzhou, Hunan 412001 (CN); ZHANG, Bin, Zhuzhou, Hunan 412001 (CN)
(74) Representative: Behr, Wolfgang
(86) International application number: PCT/CN2020/125106
(87) International publication number: WO 2022/088007

(57) **Abstract**

A method and system for switching a power supply mode of a multi-current train, and a related component. The switching method comprises: obtaining a grid state signal of contact wires by means of a sensor, in a traction system, connected to the contact wires (S1); determining a grid power supply mode according to the grid state signal (S2); determining whether the traction system is in a switchable environment (S3); if yes, switching the traction system to the grid power supply mode (S4); if the grid state signal meets a grid voltage anomaly condition in the current grid power supply mode, determining that the contact wires are in a grid voltage anomaly state, disconnecting a main circuit breaker of the traction system according to a preset protection principle (S5), and then re-performing the action of determining a grid power supply mode according to the grid state signal. The entire process of determining, by means of a sensor owned by a traction system, a grid power supply mode corresponding to contact wires and performing a switching or disconnection operation does not require manual operations and the addition of new hardware devices, and thus is a secure and reliable intelligent switching method.

## Description

The present application claims priority to Chinese Patent Application No. 202011173539.9, titled "METHOD AND SYSTEM FOR SWITCHING POWER SUPPLY MODE OF MULTI-CURRENT TRAIN, AND RELATED COMPONENT", filed on October 28, 2020 with the China National Intellectual Property Administration, which is incorporated herein by reference in its entirety.

### FIELD

The present disclosure relates to the field of power supply for a multi-system locomotive, and in particular to a method and system for switching a power supply mode of a multi-system locomotive, and related components.

### BACKGROUND

Different countries or regions have different power supply modes for railway transportation lines. In order to ensure flexible operations of locomotives in regions under different power supply modes, multi-system locomotive are generally adopted. Power supply requirements under different power supply modes are met by switching a power supply mode of a master circuit in a traction system. One of key technologies to be solved for the multi-system locomotives is: how to identify different power supply modes accurately and switch to a corresponding mode for the master circuit through a safe and reliable manner.

There are two conventional methods for switching a power supply mode of a multi-system locomotive. In a first method, a driver confirms a power supply mode and controls a switch manually to switch to the power supply mode. This method relies on an operator and is not flexible enough. In addition, the operator is highly required, which results in a potential security hazard of the method. In a second method, an external device for identifying a power supply mode is additionally installed. The device cooperates with a sign of a boundary area of a power supply region. For example, the device performs image recognition to obtain a switching signal for a power supply mode, and the traction system switches a power supply mode based on the switching signal. This method is weak in terms of real-time, and may result in an increased failure rate of a detection system for detecting a power supply mode. In addition, the method requires additional cost and space for installation.

Therefore, how to provide a solution to the above technical problems is a problem to be solved by the skilled in the art at present.

### SUMMARY

In view of this, an objective of the present disclosure is to provide a method and system for switching a power supply mode of a multi-system locomotive, and related components. Solutions are described as follows.

A method for switching a power supply mode of a multi-system locomotive is provided. The method includes: obtaining a grid state signal of a catenary through a sensor, connected with the catenary, in a traction system; determining a grid power supply mode based on the grid state signal; determining whether the traction system is in a switching-allowed environment, and switching the traction system to the grid power supply mode in a case that the traction system is in the switching-allowed environment; and determining that the traction system is in a grid voltage anomaly state, switching off a master circuit breaker of the traction system according to a predetermined protection principle, and repeating the determining a grid power supply mode based on the grid state signal, in a case that the grid state signal in a current grid power supply mode meets a condition indicating an abnormal grid voltage.

Preferably, the grid state signal includes a grid voltage amplitude and a grid voltage frequency. The determining a grid power supply mode based on the grid state signal includes: determining the grid power supply mode to be a first voltage level mode, in a case that a time period in which the grid voltage amplitude is within a first voltage range exceeds a predetermined enabling time period corresponding to this time period, a time period in which the grid voltage frequency is within a first frequency range exceeds a predetermined enabling time period corresponding to this time period, and a time period in which a peak of the grid voltage frequency is less than a first upper threshold exceeds a predetermined enabling time period corresponding to this time period; and determining the grid power supply mode to be a second voltage level mode, in a case that a time period in which the grid voltage amplitude is within a second voltage range exceeds a predetermined enabling time period corresponding to this time period, a time period in which the grid voltage frequency is within a second frequency range exceeds a predetermined enabling time period corresponding to this time period, and a time period in which the peak of the grid voltage frequency is less than a second upper threshold exceeds a predetermined enabling time period corresponding to this time period.

Preferably, the determining a grid power supply mode based on the grid state signal further includes: determining the grid power supply mode not to be the first voltage level mode, in a case that a time period in which the grid voltage amplitude is not within the first voltage range exceeds a predetermined setting time period corresponding to this time period, and a time period in which the grid voltage frequency is not within the first frequency range exceeds a predetermined setting time period corresponding to this time period; and determining the grid power supply mode not to be the second voltage level mode, in a case that a time period in which the grid voltage amplitude is not within the second voltage range exceeds a predetermined setting time period corresponding to this time period, and a time period in which the grid voltage frequency is not within the second frequency range exceeds a predetermined setting time period corresponding to this time period.

Preferably, in the switching-allowed environment: the grid power supply mode is effective; the master circuit breaker is switched off; a voltage of an intermediate loop is less than a predetermined intermediate voltage; and none of faults in a fault directory occurs in the traction system.

Preferably, after the determining whether the traction system is in a switching-allowed environment and switching the traction system to the grid power supply mode in a case that the traction system is in the switching-allowed environment, the method further includes: in a case that the voltage of the intermediate loop is greater than or equal to the predetermined intermediate voltage, discharging to reduce the voltage of the intermediate loop to be less than the predetermined intermediate voltage, and repeating the determining whether the traction system is in a switching-allowed environment.

Preferably, the predetermined protection principle includes: in the grid voltage anomaly state, switching off the master circuit breaker in a case that a real-time travel distance of the locomotive exceeds a difference between a distance of a power free zone and a maximum safe distance, where the maximum safe distance is equal to a product of a maximum travel speed of the locomotive and a segmented time-delay of the master circuit breaker.

Preferably, the grid state signal includes a grid current amplitude and a grid voltage amplitude. The condition indicating an abnormal grid voltage includes: the grid current amplitude of the locomotive under a braking condition being less than a lower-limiting current; or the grid voltage amplitude of the locomotive under a non-braking condition being less than a lower-limiting voltage.

A system for switching a power supply mode of a multi-system locomotive is further provided according to the present disclosure. The system includes: a sampling module, configured to obtain a grid state signal of a catenary through a sensor, connected with the catenary, in a traction system; a mode determination module, configured to determine a grid power supply mode based on the grid state signal; and an action module, configured to determine whether the traction system is in a switching-allowed environment, and switch the traction system to the grid power supply mode in a case that the traction system is in the switching-allowed environment; and determine that the traction system is in a grid voltage anomaly state, switch off a master circuit breaker of the traction system according to a predetermined protection principle, and trigger the mode determination module, in a case that the grid state signal in a current grid power supply mode meets a condition indicating an abnormal grid voltage.

Preferably, the grid state signal includes a grid voltage amplitude and a grid voltage frequency. The mode determination module is configured to: determine the grid power supply mode to be a first voltage level mode, in a case that a time period in which the grid voltage amplitude is within a first voltage range exceeds a predetermined enabling time period corresponding to this time period, a time period in which the grid voltage frequency is within a first frequency range exceeds a predetermined enabling time period corresponding to this time period, and a time period in which a peak of the grid voltage frequency is less than a first upper threshold exceeds a predetermined enabling time period corresponding to this time period; and determine the grid power supply mode to be a second voltage level mode, in a case that a time period in which the grid voltage amplitude is within a second voltage range exceeds a predetermined enabling time period corresponding to this time period, a time period in which the grid voltage frequency is within a second frequency range exceeds a predetermined enabling time period corresponding to this time period, and a time period in which the peak of the grid voltage frequency is less than a second upper threshold exceeds a predetermined enabling time period corresponding to this time period.

Preferably, the mode determination module is further configured to: determine the grid power supply mode not to be the first voltage level mode, in a case that a time period in which the grid voltage amplitude is not within the first voltage range exceeds a predetermined setting time period corresponding to this time period, and a time period in which the grid voltage frequency is not within the first frequency range exceeds a predetermined setting time period corresponding to this time period; and determine the grid power supply mode not to be the second voltage level mode, in a case that a time period in which the grid voltage amplitude is not within the second voltage range exceeds a predetermined setting time period corresponding to this time period, and a time period in which the grid voltage frequency is not within the second frequency range exceeds a predetermined setting time period corresponding to this time period.

Preferably, in the switching-allowed environment: the grid power supply mode is effective; the master circuit breaker is switched off; a voltage of an intermediate loop is less than a predetermined intermediate voltage; and none of faults in a fault directory occurs in the traction system.

Preferably, the action module is further configured to: in a case that the voltage of the intermediate loop is greater than or equal to the predetermined intermediate voltage, discharge to reduce the voltage of the intermediate loop to be less than the predetermined intermediate voltage; and re-determine whether the traction system is in a switching-allowed environment.

Preferably, the predetermined protection principle includes: in the grid voltage anomaly state, switching off the master circuit breaker in a case that a real-time travel distance of the locomotive exceeds a difference between a distance of a power free zone and a maximum safe distance, where the maximum safe distance is equal to a product of a maximum travel speed of the locomotive and a segmented time-delay of the master circuit breaker.

Preferably, the grid state signal includes a grid current amplitude and a grid voltage amplitude. The condition indicating an abnormal grid voltage includes: the grid current amplitude of the locomotive under a braking condition being less than a lower-limiting current; or the grid voltage amplitude of the locomotive under a non-braking condition being less than a lower-limiting voltage

An apparatus for switching a power supply mode of a multi-system locomotive is further provided according to the present disclosure. The apparatus includes: a memory storing a computer program; and a processor, configured to execute the computer program to perform the method for switching a power supply mode of a multi-system locomotive according to any one of the above.

A readable storage medium storing a computer program is further provided according to the present disclosure. The computer program, when executed by a processor, performs the method for switching a power supply mode of a multi-system locomotive according to any one of the above.

A method for switching a power supply mode of a multi-system locomotive is provided according to the present disclosure. The method includes: obtaining a grid state signal of a catenary through a sensor, connected with the catenary, in a traction system; determining a grid power supply mode based on the grid state signal; determining whether the traction system is in a switching-allowed environment, and switching the traction system to the grid power supply mode in a case that the traction system is in the switching-allowed environment; and determining that the traction system is in a grid voltage anomaly state, switching off a master circuit breaker of the traction system according to a predetermined protection principle, and repeating the determining a grid power supply mode based on the grid state signal, in a case that the grid state signal in a current grid power supply mode meets a condition indicating an abnormal grid voltage. In the present disclosure, the grid power supply mode corresponding to the catenary is determined through the sensor of the traction system, and the grid power supply mode is switched or switched off. Switching of the power supply mode can be performed automatically during a normal travel, without a manual operation or additional hardware device. Hence, the method is safe, reliable and smart.

### BRIEF DESCRIPTION OF THE DRAWINGS

Figure 1 is a structural diagram of a master circuit of a traction system of a conventional multi-system locomotive according to an embodiment of the present disclosure;
Figure 2 is a flowchart of a method for switching a power supply mode of a multi-system locomotive according to an embodiment of the present disclosure;
Figure 3a shows content from *EN50163 Railway Applications- Supply Voltages of Traction Systems*;
Figure 3b shows content from *EN50163 Railway Applications- Supply Voltages of Traction Systems*; and

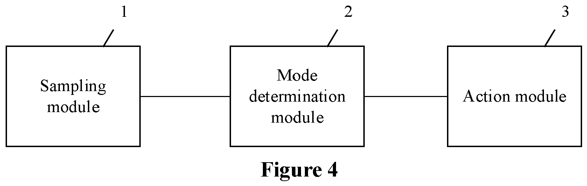

Figure 4 is a structural diagram of a system for switching a power supply mode of a multi-system locomotive according to an embodiment of the present disclosure.

### DETAILED DESCRIPTION OF EMBODIMENTS

Hereinafter technical solutions of embodiments of the present disclosure are described clearly and completely in conjunction with the drawings of the present disclosure. Apparently, the embodiments described here are only some of, rather than all, embodiments of the present disclosure. Any other embodiment obtained by those skilled in the art based on the embodiments in the present disclosure without any creative effort falls within the protection scope of the present disclosure.

### Embodiment 1

There are two methods for switching a power supply mode of a multi-system locomotive. In a first method, a driver confirms a power supply mode and controls a switch manually to switch to the power supply mode. This method relies on an operator and is not flexible enough. In addition, the operator is highly required, which results in a potential security hazard of the method. In a second method, an external device for identifying a power supply mode is additionally installed. The device cooperates with a sign of a boundary area of a power supply region. This method is weak in terms of real-time, and may result in an increased failure rate of a detection system for detecting a power supply mode. In addition, the method requires additional cost and space for installation.

In the present disclosure, a grid power supply mode corresponding to a catenary is determined through a sensor of a traction system, and the grid power supply mode is switched or switched off. Switching of the power supply mode can be performed automatically during a normal travel, without a manual operation or additional hardware device. Hence, the method is safe, reliable and smart.

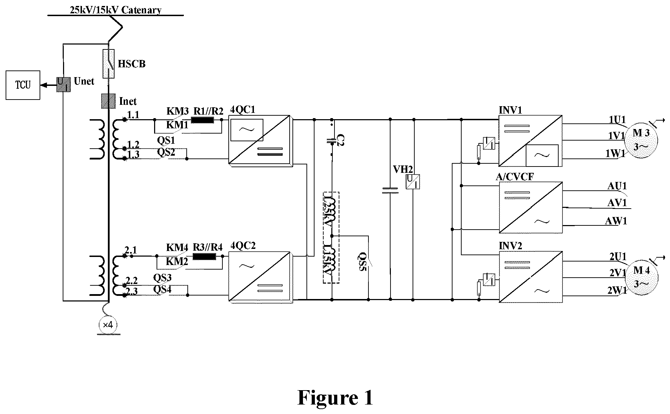

A principle of a master circuit of a traction system of a conventional multi-system locomotive is as shown in Figure 1. The master circuit has the following features. A traction transformer is provided with a shunting tap at an output side of a secondary winding, so as to ensure a same amplitude of output voltages of the secondary winding under different power supply modes. A traction converter is provided with a switching switch at an input side connected with the traction transformer. Any of two power supply modes can be realized by configuring the switch. Under control of PWM (Pulse Width Modulation) at a rectifier side, an intermediate loop generates a pulsating component having twice a frequency of the power grid. The intermediate loop is generally realized by configuring a secondary resonant loop. for example, twice a resonance frequency of a power grid in a power supply mode of 25kV/50Hz is different from twice a resonance frequency of a power grid in a power supply mode of 15kV/16.7Hz. Therefore, it is required to configure switches to realize resonance loops under different modes. States of switches corresponding to different power supply modes are list below.

Under a power supply of 25kV, QS1 and QS3 are switched on, and QS2, QS4 and QS5 are switched off.

Under a power supply of 15kV, QS2, QS4 and QS5 are switched on, and QS1 and QS3 are switched off.

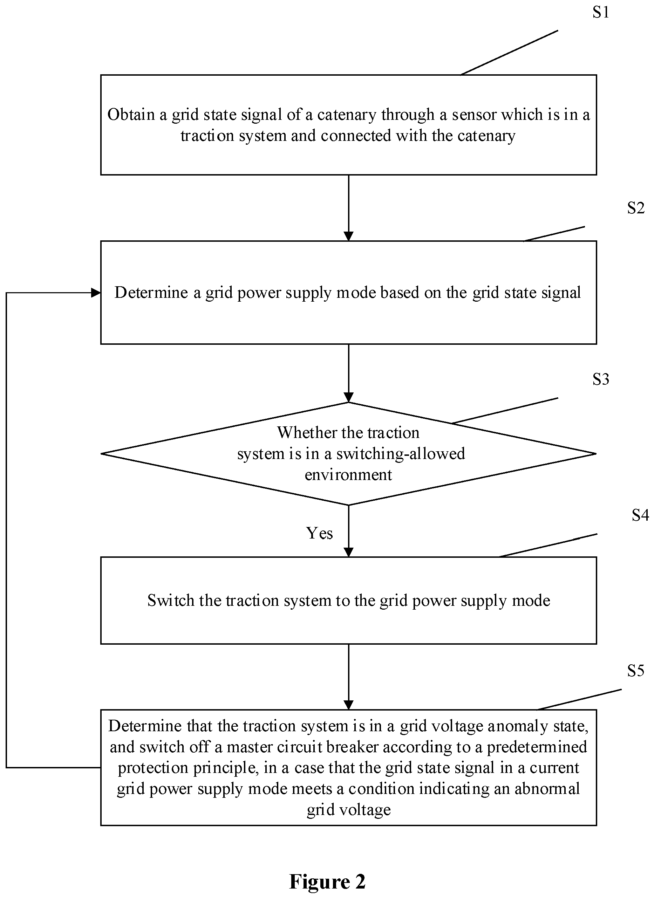

A method for switching a power supply mode of a multi-system locomotive is provided according to an embodiment of the present disclosure. Reference is made to Figure 2. The method includes steps S1 to S5.

In step S 1, a grid state signal of a catenary is obtained through a sensor, connected with the catenary, in a traction system.

In step S2, a grid power supply mode is determined based on the grid state signal.

In step S3, it is determined whether the traction system is in a switching-allowed environment.

In step S4, the traction system is switched to the grid power supply mode, in a case that the traction system is in the switching-allowed environment. In a case that the traction system is not in the switching-allowed environment and can be adjusted to be in the switching-allowed environment, the traction system is adjusted to be in the switching-allowed environment and then the method proceeds to step S4. In a case that the traction system is not in the switching-allowed environment and cannot be adjusted to be in the switching-allowed environment, alarm message is sent.

In step S5, in a case that the grid state signal in a current grid power supply mode meets a condition indicating an abnormal grid voltage, it is determined that the traction system is in a grid voltage anomaly state, a master circuit breaker of the traction system is switched off according to a predetermined protection principle, and the grid power supply mode is re-determined based on the grid state signal.

In an example, the method may be performed by a transmission control unit TCU of the traction system. Alternatively, other control units may be adopted to perform the method.

Step S1 may be started after pantograph rising of the locomotive. The sensor in the traction system may obtain grid state information of the catenary in real time. The grid state signal is obtained continuously, that is, step S1 is not stopped due to execution of subsequent steps.

In an example, switching of the power supply mode of the traction system mainly refers to switching isolating switches (QS1 to QS5 as shown in Figure 1) in the traction system. Such switching does not directly cause conduction between the catenary and the traction system. The conduction between the catenary and the traction system is determined by a high-voltage circuit breaker, i.e. HSCB in Figure 1. A master circuit breaker remains switched-off before step S4 is completed. The master circuit breaker may be switched on only after step S4 is completed, so that the catenary supplies power to the traction system.

Further, a verification process may be performed after step S4. In a case that states of the isolating switches correspond to the grid power supply mode after step S4, the master circuit breaker is switched on. In a case that states of the isolating switches do not correspond to the grid power supply mode after step S4, it is prohibited to switch on the master circuit breaker, so as to ensure safety of the traction system.

In an example, a process of switching on the master circuit breaker and supplying power to the traction system through the catenary may further include pre-charging of the master circuit.

It can be understood that in step S5, the locomotive is in a certain grid power supply mode and the grid state signal is monitored. In a case that a grid voltage is abnormal, the master circuit breaker is required to be temporarily switched off and then switched on at an appropriate time instant. The grid voltage may be abnormal in the following two situations. In a first situation, the locomotive enters a neutral zone, or partitioning zone, without any fault, and the master circuit breaker is required to be temporarily switched off and switched on when in a switching-allowed environment for a next grid power supply mode. In a second situation, an unknown fault occurs, power supply is required to be temporarily interrupted and restored later. Restoration of the power supply is realized by repeating steps S2 to S4 after the master circuit breaker is switched off according to the predetermined protection principle.

A method for switching a power supply mode of a multi-system locomotive is provided according to the present disclosure. The method includes: obtaining a grid state signal of a catenary through a sensor, connected with the catenary, in a traction system; determining a grid power supply mode based on the grid state signal; determining whether the traction system is in a switching-allowed environment, and switching the traction system to the grid power supply mode in a case that the traction system is in the switching-allowed environment; and determining that the traction system is in a grid voltage anomaly state, switching off a master circuit breaker of the traction system according to a predetermined protection principle, and repeating the determining a grid power supply mode based on the grid state signal, in a case that the grid state signal in a current grid power supply mode meets a condition indicating an abnormal grid voltage. In the present disclosure, the grid power supply mode corresponding to the catenary is determined through the sensor of the traction system, and the grid power supply mode is switched or switched off. Switching of the power supply mode can be performed automatically during a normal travel, without a manual operation or additional hardware device. Hence, the method is safe, reliable and smart.

### Embodiment 2

A method for switching a power supply mode of a multi-system locomotive is provided according to a further embodiment of the present disclosure. Compared with embodiment 1, the technical solution is further described and optimized in this embodiment.

In an example, the grid state signal includes a grid voltage amplitude and a grid voltage. Step S2 of determining a grid power supply mode based on the grid state signal includes: determining the grid power supply mode to be a first voltage level mode, in a case that a time period in which the grid voltage amplitude is within a first voltage range exceeds a predetermined enabling time period corresponding to this time period, a time period in which the grid voltage frequency is within a first frequency range exceeds a predetermined enabling time period corresponding to this time period, and a time period in which a peak of the grid voltage frequency is less than a first upper threshold exceeds a predetermined enabling time period corresponding to this time period; and determining the grid power supply mode to be a second voltage level mode, in a case that a time period in which the grid voltage amplitude is within a second voltage range exceeds a predetermined enabling time period corresponding to this time period, a time period in which the grid voltage frequency is within a second frequency range exceeds a predetermined enabling time period corresponding to this time period, and a time period in which the peak of the grid voltage frequency is less than a second upper threshold exceeds a predetermined enabling time period corresponding to this time period.

The determining a grid power supply mode based on the grid state signal further includes: determining the grid power supply mode not to be the first voltage level mode, in a case that a time period in which the grid voltage amplitude is not within the first voltage range exceeds a predetermined setting time period corresponding to this time period, and a time period in which the grid voltage frequency is not within the first frequency range exceeds a predetermined setting time period corresponding to this time period; and determining the grid power supply mode not to be the second voltage level mode, in a case that a time period in which the grid voltage amplitude is not within the second voltage range exceeds a predetermined setting time period corresponding to this time period, and a time period in which the grid voltage frequency is not within the second frequency range exceeds a predetermined setting time period corresponding to this time period.

It can be understood that the above-mentioned voltage ranges, frequency ranges, upper thresholds, predetermined enabling time periods, and the predetermined setting time periods used for determining the grid power supply mode may all be set based on actual needs, or designed according to a local power supply standard for locomotives. For example, *EN50163 Railway Applications- Supply Voltages of Traction Systems* defines clear requirements for power supply modes of a TSI railway catenary.

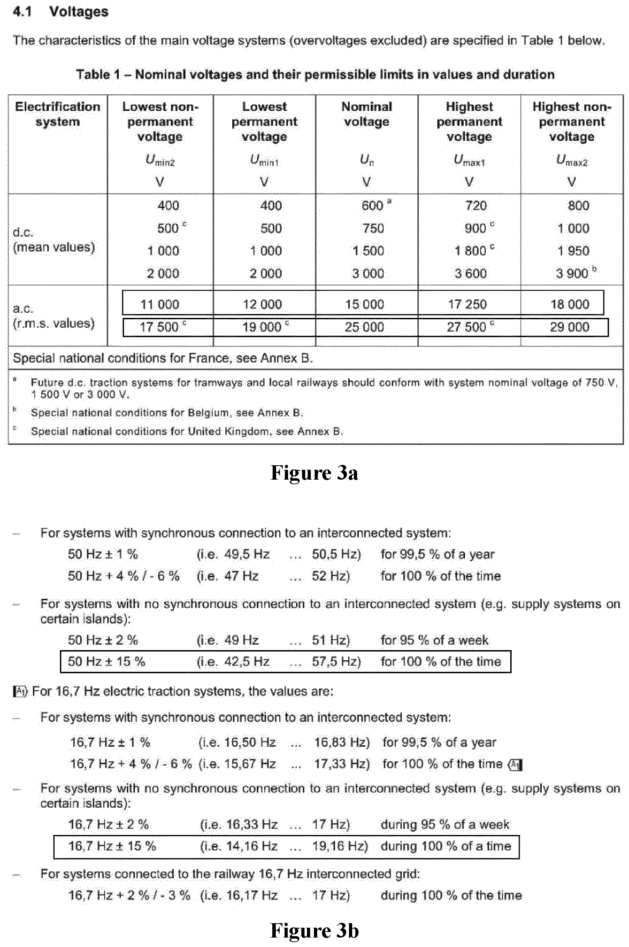

Requirements for the supply voltage are shown in Figure 3a. A normal voltage range (corresponding to the first voltage range or the second voltage range) of a 25kV power supply mode may be set as [17.5kV, 29kV], and a normal voltage range of a 15kV power supply mode may be set as [11kV, 18kV].

Requirements for the power supply frequency are shown in Figure 3b. Under a worst power supply mode, a normal frequency range (corresponding to a first frequency range or a second frequency range) of the 25kV power supply mode may be set as [42.5Hz, 57.5Hz], and a normal frequency range of the 15kV power supply mode may be set as [14.16Hz, 19.16Hz].

The predetermined enabling time periods corresponding to the time period in which the grid voltage amplitude is within the first voltage range, the time period in which the grid voltage frequency is within the first frequency range, and the time period in which the peak of the grid voltage frequency is less than the first upper threshold may be set to 2s, 2s, and 0.5s, respectively. Apparently, the predetermined enabling time periods may be set to other values and adjusted as required.

Further, in the switching-allowed environment: the grid power supply mode is effective; the master circuit breaker is switched off; a voltage of an intermediate loop is less than a predetermined intermediate voltage; and none of faults in a fault directory occurs in the traction system.

The grid power supply mode being effective refers to that there is a certain power supply mode determined in the process of determining the grid power supply mode above. It can be understood that two power supply modes are taken as examples in this embodiment. A condition for determining a current grid power supply mode to be the first voltage level mode, a condition for determining the current grid power supply mode to be the second voltage level mode, a condition for determining the current grid power supply mode not to be the first voltage level mode, and a condition for determining the current grid power supply mode not to be the second voltage level mode are listed. In practice, there are three grid power supply modes, i.e., the first voltage level mode, the second voltage level mode, and a power-off mode. The effective grid power supply mode corresponds to that the current grid power supply mode is determined to be the first voltage level mode or the second voltage level mode, that is, the catenary operates normally and supplies power to the traction system.

In the switching-allowed environment, the voltage of the intermediate circuit is required to be less than a predetermined intermediate voltage. The predetermined intermediate voltage is usually set to 36V, which corresponds to a safe voltage environment. In a case that the voltage of the intermediate circuit is greater than or equal to the predetermined intermediate voltage, the voltage of the intermediate circuit may be reduced through a rapid discharge. In other words, after determining whether the traction system is in the switching-allowed environment, and switching the traction system to the grid power supply mode in a case that the traction system is in the switching-allowed environment, the method further includes: in a case that the voltage of the intermediate circuit is greater than or equal to the predetermined intermediate voltage discharging to reduce the voltage of the intermediate circuit to be less than the predetermined intermediate voltage, and repeating the determining whether the traction system is in a switching-allowed environment.

### Embodiment 3

A method for switching a power supply mode of a multi-system locomotive is provided according to this embodiment of the present disclosure. Compared with the previous embodiment, the technical solution is further described and optimized in this embodiment. In this embodiment, a protective action in step S5 in response to an abnormal grid voltage is described in detail.

The grid state signal used for determining an abnormal grid voltage includes a grid current amplitude and a grid voltage amplitude.

The condition indicating an abnormal grid voltage includes: the grid current amplitude of the locomotive under a braking condition being less than a lower-limiting current; or the grid voltage amplitude of the locomotive under a non-braking condition being less than a lower-limiting voltage.

It can be understood that the lower-limiting current and the lower-limiting voltage here both correspond to the current grid power supply mode. Different grid power supply modes correspond to different lower-limiting currents and different lower-limiting voltages.

The predetermined protection principle includes: in the grid voltage anomaly state, switching off the master circuit breaker in a case that a real-time travel distance of the locomotive exceeds a difference between a distance of a power free zone and a maximum safe distance. The maximum safe distance is equal to a product of a maximum travel speed of the locomotive and a segmented time-delay of the master circuit breaker.

The principle may be specifically expressed as: *S*₁ ≥ *L* - *S*₂ , where *S*₁ = ∫(*vt*), and *S*₂ = *v*ₘₐₓ ·*T .* In the expression, *S*₁ represents the real-time travel distance of the locomotive; *L* represents the distance of the power free zone; *S*₂ represents the maximum safe distance; *v* represents a real-time travel speed; *t* represents a time interval from a time instant at which the grid voltage anomaly state is determined to a current time instant; *v*ₘₐₓ represents the maximum travel speed; and *T* represents the segmented time-delay of the master circuit breaker.

In a case that it is determined that the traction system is in a grid voltage anomaly state, a complete pulse blocking is performed, and the locomotive continues traveling. The master circuit breaker is switched off immediately as soon as the predetermined protection principle is satisfied, that is, there has *S*₁ ≥ *L - S₂.* Thereby, a protection on the master circuit breaker is realized.

It can be understood that in step S5, the locomotive is in a certain grid power supply mode and the grid state signal is monitored. In a case of the grid voltage anomaly state, the master circuit breaker is required to be temporarily switched off and then switched on at an appropriate time instant. There are two possible situations of the grid voltage anomaly state. In a first situation, the locomotive enters a neutral zone, or partitioning zone, without any fault, and the master circuit breaker is required to be temporarily switched off and then switched on when in a switching-allowed environment for a next grid power supply mode. In a second situation, an unknown fault occurs, and the power supply is required to be temporarily interrupted and restored later. Restoration of the power supply is realized by repeating steps S 1 to S4 after the master circuit breaker is switched off according to the predetermined protection principle. In consideration of the two situations, the predetermined protection principle, *S*₁ ≥ *L* - *S*₂ , is set in this embodiment, so as to avoid frequent actions of the master circuit breaker, and ensure safety of the system under the grid voltage anomaly state.

### Embodiment 4

A system for switching a power supply mode of a multi-system locomotive is further provided according to an embodiment of the present disclosure. Referring to Figure 3, the system includes a sampling module 1, a mode determination module 2, and an action module 3.

The sampling module 1 is configured to obtain a grid state signal of a catenary through a sensor, connected with the catenary, in a traction system.

The mode determination module 2 is configured to determine a grid power supply mode based on the grid state signal.

The action module 3 is configured to: determine whether the traction system is in a switching-allowed environment, and switch the traction system to the grid power supply mode in a case that the traction system is in the switching-allowed environment; and determine that the traction system is in a grid voltage anomaly state, switch off a master circuit breaker of the traction system according to a predetermined protection principle, and trigger the mode determination module 2, in a case that the grid state signal in a current grid power supply mode meets a condition indicating an abnormal grid voltage.

In the present disclosure, a grid power supply mode corresponding to a catenary is determined through a sensor of a traction system, and the grid power supply mode is switched or switched off. Switching of the power supply mode can be performed automatically during a normal travel, without a manual operation or additional hardware device. Hence, the method is safe, reliable and smart.

In some embodiments, the grid state signal includes a grid voltage amplitude and a grid voltage frequency. The mode determination module 2 is configured to: determine the grid power supply mode to be a first voltage level mode, in a case that a time period in which the grid voltage amplitude is within a first voltage range exceeds a predetermined enabling time period corresponding to this time period, a time period in which the grid voltage frequency is within a first frequency range exceeds a predetermined enabling time period corresponding to this time period, and a time period in which a peak of the grid voltage frequency is less than a first upper threshold exceeds a predetermined enabling time period corresponding to this time period; and determine the grid power supply mode to be a second voltage level mode, in a case that a time period in which the grid voltage amplitude is within a second voltage range exceeds a predetermined enabling time period corresponding to this time period, a time period in which the grid voltage frequency is within a second frequency range exceeds a predetermined enabling time period corresponding to this time period, and a time period in which the peak of the grid voltage frequency is less than a second upper threshold exceeds a predetermined enabling time period corresponding to this time period.

In some embodiments, the mode determination module 2 is further configured to: determine the grid power supply mode not to be the first voltage level mode, in a case that a time period in which the grid voltage amplitude is not within the first voltage range exceeds a predetermined setting time period corresponding to this time period, and a time period in which the grid voltage frequency is not within the first frequency range exceeds a predetermined setting time period corresponding to this time period; and determine the grid power supply mode not to be the second voltage level mode, in a case that a time period in which the grid voltage amplitude is not within the second voltage range exceeds a predetermined setting time period corresponding to this time period, and a time period in which the grid voltage frequency is not within the second frequency range exceeds a predetermined setting time period corresponding to this time period.

In some embodiments, in the switching-allowed environment: the grid power supply mode is effective; the master circuit breaker is switched off; a voltage of an intermediate loop is less than a predetermined intermediate voltage; and none of faults in a fault directory occurs in the traction system.

In some embodiments, the action module 3 is further configured to: in a case that the voltage of the intermediate loop is greater than or equal to the predetermined intermediate voltage, discharge to reduce the voltage of the intermediate loop to be less than the predetermined intermediate voltage, and re-determine whether the traction system is in a switching-allowed environment.

In some embodiments, the predetermined protection principle includes: in the grid voltage anomaly state, switching off the master circuit breaker in a case that a real-time travel distance of the locomotive exceeds a difference between a distance of a power free zone and a maximum safe distance, where the maximum safe distance is equal to a product of a maximum travel speed of the locomotive and a segmented time-delay of the master circuit breaker.

In some embodiments, the grid state signal includes a grid current amplitude and a grid voltage amplitude. The condition indicating an abnormal grid voltage includes: the grid current amplitude of the locomotive under a braking condition being less than a lower-limiting current; or the grid voltage amplitude of the locomotive under a non-braking condition being less than a lower-limiting voltage.

### Embodiment 5

An apparatus for switching a power supply mode of a multi-system locomotive is further provided according to an embodiment of the present disclosure. The apparatus includes a memory and a processor.

The memory stores a computer program.

The processor is configured to execute the computer program to perform the method for switching a power supply mode of a multi-system locomotive according to any one of the above embodiments.

It can be understood that reference can be made to the description in the above embodiments for details of the method for switching a power supply mode of a multi-system locomotive, which is not repeated here.

The apparatus in this embodiment has the same beneficial effects as those described in the above embodiments, and the beneficial effect is not repeated here.

### Embodiment 6

A readable storage medium is further provided according to an embodiment of the present disclosure. The readable storage medium stores a computer program. The computer program, when executed by a processor, performs the method for switching a power supply mode of a multi-system locomotive according to any one of the above embodiments.

It can be understood that reference can be made to the description in the above embodiments for details of the method for switching a power supply mode of a multi-system locomotive, which is not repeated here.

The readable storage medium in this embodiment has the same beneficial effects as those described in the above embodiments, and the beneficial effect is not repeated here.

Finally, it should be noted that those skilled in the art can understand that all or part of the steps of the methods in the above embodiments can be completed by instructing related hardware through a program. The program may be stored in a computer readable storage unit. The storage unit for all embodiments of the present disclosure includes a read-only memory, a random-access memory, a disk, or the like.

In the present disclosure, terms "include", "comprise" or any other variants are intended to be non-exclusive. Therefore, a process, a method, an article or a device including multiple elements includes not only the elements but also other elements that are not enumerated, or further includes elements inherent for the process, the method, the article or the device. Unless expressively limited otherwise, the statement "including one..." does not exclude existence of other similar elements in the process, the method, the article or the device.

The embodiments of the present disclosure are described in a progressive manner, each embodiment focuses on differences from other embodiments, and the same or similar parts of various embodiments may be referred to each other.

The above description of the embodiments enables those skilled in the art to implement or use the technical solutions of the present disclosure. Numerous modifications to the embodiments are apparent to those skilled in the art, and the general principles defined herein may be implemented in other embodiments without departing from the spirit or scope of the present disclosure. Therefore, the present disclosure is not limited to the embodiments described herein, but should comply with the widest scope consistent with the principles and novel features disclosed herein.

## Claims

1. A method for switching a power supply mode of a multi-system locomotive, comprising:
obtaining a grid state signal of a catenary through a sensor, connected with the catenary, in a traction system;
determining a grid power supply mode based on the grid state signal;
determining whether the traction system is in a switching-allowed environment, and switching the traction system to the grid power supply mode in a case that the traction system is in the switching-allowed environment; and
determining that the traction system is in a grid voltage anomaly state, switching off a master circuit breaker of the traction system according to a predetermined protection principle, and repeating the determining a grid power supply mode based on the grid state signal, in a case that the grid state signal in a current grid power supply mode meets a condition indicating an abnormal grid voltage.

2. The method according to claim 1, wherein the grid state signal comprises a grid voltage amplitude and a grid voltage frequency, and the determining a grid power supply mode based on the grid state signal comprises:
determining the grid power supply mode to be a first voltage level mode, in a case that a time period in which the grid voltage amplitude is within a first voltage range exceeds a predetermined enabling time period corresponding to this time period, a time period in which the grid voltage frequency is within a first frequency range exceeds a predetermined enabling time period corresponding to this time period, and a time period in which a peak of the grid voltage frequency is less than a first upper threshold exceeds a predetermined enabling time period corresponding to this time period; and
determining the grid power supply mode to be a second voltage level mode, in a case that a time period in which the grid voltage amplitude is within a second voltage range exceeds a predetermined enabling time period corresponding to this time period, a time period in which the grid voltage frequency is within a second frequency range exceeds a predetermined enabling time period corresponding to this time period, and a time period in which the peak of the grid voltage frequency is less than a second upper threshold exceeds a predetermined enabling time period corresponding to this time period.

3. The method according to claim 2, wherein the determining a grid power supply mode based on the grid state signal further comprises:
determining the grid power supply mode not to be the first voltage level mode, in a case that a time period in which the grid voltage amplitude is not within the first voltage range exceeds a predetermined setting time period corresponding to this time period, and a time period in which the grid voltage frequency is not within the first frequency range exceeds a predetermined setting time period corresponding to this time period; and
determining the grid power supply mode not to be the second voltage level mode, in a case that a time period in which the grid voltage amplitude is not within the second voltage range exceeds a predetermined setting time period corresponding to this time period, and a time period in which the grid voltage frequency is not within the second frequency range exceeds a predetermined setting time period corresponding to this time period.

4. The method according to claim 1, wherein in the switching-allowed environment:
the grid power supply mode is effective;
the master circuit breaker is switched off;
a voltage of an intermediate loop is less than a predetermined intermediate voltage; and
none of faults in a fault directory occurs in the traction system.

5. The method according to claim 4, wherein after the determining whether the traction system is in a switching-allowed environment, and switching the traction system to the grid power supply mode in a case that the traction system is in the switching-allowed environment, the method further comprises:
in a case that the voltage of the intermediate loop is greater than or equal to the predetermined intermediate voltage,
discharging to reduce the voltage of the intermediate loop to be less than the predetermined intermediate voltage; and
repeating the determining whether the traction system is in a switching-allowed environment.

6. The method according to any one of claims 1 to 5, wherein the predetermined protection principle comprises:
in the grid voltage anomaly state, switching off the master circuit breaker in a case that a real-time travel distance of the locomotive exceeds a difference between a distance of a power free zone and a maximum safe distance, wherein the maximum safe distance is equal to a product of a maximum travel speed of the locomotive and a segmented time-delay of the master circuit breaker.

7. The method according to claim 6, wherein
the grid state signal comprises a grid current amplitude and a grid voltage amplitude; and
the condition indicating an abnormal grid voltage comprises:
the grid current amplitude of the locomotive under a braking condition being less than a lower-limiting current; or
the grid voltage amplitude of the locomotive under a non-braking condition being less than a lower-limiting voltage.

8. A system for switching a power supply mode of a multi-system locomotive, comprising:
a sampling module, configured to obtain a grid state signal of a catenary through a sensor which is in a traction system and connected with the catenary;
a mode determination module, configured to determine a grid power supply mode based on the grid state signal; and
an action module, configured to
determine whether the traction system is in a switching-allowed environment, and switch the traction system to the grid power supply mode in a case that the traction system is in the switching-allowed environment; and
determine that the traction system is in a grid voltage anomaly state, switch off a master circuit breaker of the traction system according to a predetermined protection principle, and trigger the mode determination module, in a case that the grid state signal in a current grid power supply mode meets a condition indicating an abnormal grid voltage.

9. The system according to claim 8, wherein the grid state signal comprises a grid voltage amplitude and a grid voltage frequency, and the mode determination module is configured to:
determine the grid power supply mode to be a first voltage level mode, in a case that a time period in which the grid voltage amplitude is within a first voltage range exceeds a predetermined enabling time period corresponding to this time period, a time period in which the grid voltage frequency is within a first frequency range exceeds a predetermined enabling time period corresponding to this time period, and a time period in which a peak of the grid voltage frequency is less than a first upper threshold exceeds a predetermined enabling time period corresponding to this time period; and
determine the grid power supply mode to be a second voltage level mode, in a case that a time period in which the grid voltage amplitude is within a second voltage range exceeds a predetermined enabling time period corresponding to this time period, a time period in which the grid voltage frequency is within a second frequency range exceeds a predetermined enabling time period corresponding to this time period, and a time period in which the peak of the grid voltage frequency is less than a second upper threshold exceeds a predetermined enabling time period corresponding to this time period.

10. The system according to claim 9, wherein the mode determination module is further configured to:
determine the grid power supply mode not to be the first voltage level mode, in a case that a time period in which the grid voltage amplitude is not within the first voltage range exceeds a predetermined setting time period corresponding to this time period, and a time period in which the grid voltage frequency is not within the first frequency range exceeds a predetermined setting time period corresponding to this time period; and
determine the grid power supply mode not to be the second voltage level mode, in a case that a time period in which the grid voltage amplitude is not within the second voltage range exceeds a predetermined setting time period corresponding to this time period, and a time period in which the grid voltage frequency is not within the second frequency range exceeds a predetermined setting time period corresponding to this time period.

11. The system according to claim 8, wherein in the switching-allowed environment:
the grid power supply mode is effective;
the master circuit breaker is switched off;
a voltage of an intermediate loop is less than a predetermined intermediate voltage; and
none of faults in a fault directory occurs in the traction system.

12. The system according to claim 11, wherein the action module is further configured to:
in a case that the voltage of the intermediate loop is greater than or equal to the predetermined intermediate voltage,
discharge to reduce the voltage of the intermediate loop to be less than the predetermined intermediate voltage; and
re-determine whether the traction system is in a switching-allowed environment..

13. The system according to any one of claims 8 to 12, wherein the predetermined protection principle comprises:
in the grid voltage anomaly state, switching off the master circuit breaker in a case that a real-time travel distance of the locomotive exceeds a difference between a distance of a power free zone and a maximum safe distance, wherein the maximum safe distance is equal to a product of a maximum travel speed of the locomotive and a segmented time-delay of the master circuit breaker..

14. The system according to claim 13, wherein
the grid state signal comprises a grid current amplitude and a grid voltage amplitude; and
the grid voltage anomaly condition comprises:
the grid current amplitude of the locomotive under a braking condition being less than a lower-limiting current; or
the grid voltage amplitude of the locomotive under a non-braking condition being less than a lower-limiting voltage.

15. An apparatus for switching a power supply mode of a multi-system locomotive, comprising:
a memory storing a computer program; and
a processor, configured to execute the computer program to perform the method for switching a power supply mode of a multi-system locomotive according to any one of claims 1 to 7.

16. A readable storage medium, storing a computer program, wherein the computer program, when executed by a processor, performs the method for switching a power supply mode of a multi-system locomotive according to any one of claims 1 to 7.
